# EUROPEAN PATENT APPLICATION

(11) **EP 4 151 702 A1**
(43) Date of publication of application: **22.03.2023**
(21) Application number: 22196213.7
(22) Date of filing: 16.09.2022
(51) Int. Cl.: C10B 53/07, C10B 47/44, C10B 57/06, C10G 1/10, C10B 19/00

(54) **METHOD FOR THE CONTINUOUS HEAT TREATMENT OF A FEED MATERIAL STREAM COMPRISING AT LEAST A POLYMERIC MATERIAL FRACTION AND PLANT FOR CARRYING OUT SAID METHOD**

(30) Priority: 17.09.2021 IT 202100023996
(71) Applicant: Alpha Trading S.p.A., 20124 Milano (MI) (IT)
(72) Inventor: NICOLELLA, Cristiano, 56011 Calci (PI) (IT); ROSSI, Francesco, 56040 Castellina Marittima (PI) (IT); ANNUNZI, Federica, 56040 Montescudaio (PI) (IT); STAGNI, Silvio, 41123 GENOVA (GE) (IT)
(74) Representative: Cosenza, Simona

(57) **Abstract**

The present invention relates to a method for the continuous heat treatment of a feed material stream (MT) comprising at least a fraction of polymeric material, comprising the steps of:
- forming a mixture of a material to be treated (MT) and of at least one particle-form solid inert material (SI), wherein said material to be treated comprises a fraction of polymeric material;
- advancing a stream of said mixture along the heat treatment zone of a pyrolyzer (101), that heat treatment zone comprises in sequence a heating section (R10) and a pyrolysis section (R20), along which said stream of said mixture is subjected to heating and pyrolyzing in the absence of oxygen at a temperature between 300°C and 900°C, obtaining condensable vapors and/or incondensable gases and solid carbon residues;
- exiting said condensable vapors and/or said incondensable gases obtained in the pyrolysis step through at least one gas outlet zone (R30) of said pyrolyzer (101);
- exiting said solid carbon residues obtained in the pyrolysis step and said at least one particle-form solid inert material (SI) through at least one outlet area (R40) of solid products of said pyrolyzer (101), wherein said at least one particle-form solid inert material (SI) is stable at temperatures lower than or equal to 800°C and has at least one of the following characteristics:
- a density (as defined by the UNI EN 1097-3 standard) between 700 kg/m³ and 1000 kg/m³, preferably between 800 kg/m³ and 900 kg/m³, and/or
- a porosity of between 25% and 85%, preferably between 45% and 75%.

The invention also relates to a plant for carrying out said method.

## Description

The present invention relates to a method for the continuous heat treatment of a feed material stream comprising at least a fraction of polymeric material.

More specifically, the invention relates to a method of the type indicated above which provides for the use of a particle-form solid inert material mixed with the material to be treated, also preferably in the form of solid particles, in order to improve the characteristics of fluidity of the stream of the material to be treated and, in particular, of the fraction of polymeric material thereof inside the reactor or furnace within which the heat treatment is conducted, in particular inside the pyrolyzer within which the pyrolyzation of the material to be treated is carried out.

The present invention also relates to a plant for carrying out the aforementioned method, comprising a pyrolyzer for the heat treatment of a feed material stream comprising at least a fraction of polymeric material.

### Field of the invention

In recent years there has been the development of methods and systems for the processing and recycling of heterogeneous mixtures of waste/scraps materials comprising at least a fraction of polymeric material, wherein this fraction in turn can also comprise polymeric materials that are different from each other. The pyrolysis heat treatment is an interesting prospect for the management of these waste/scraps materials.

In the pyrolysis process, the material to be treated is heated in so-called pyrolyzers consisting of continuous or discontinuous reactors or ovens in the absence of oxygen. As a result of thermal cracking reactions from the fraction of polymeric material, products are formed which have a wide range of molecular weight distribution: the molecular weight of the products obtained varies according to the operating conditions of temperature, heating rate and residence time in the pyrolyzer.

These products can be separated into an incondensable fraction (pyrolysis gas), a liquid fraction (pyrolysis oil) and a carbon residue (pyrolysis char).

As mentioned, the plants for the heat treatment of waste/scraps materials can be of the discontinuous and continuous type; the latter type is obviously the most preferred, but also the one that can potentially present major technical problems, in particular precisely in the case in which the mixtures of waste/scraps materials to be treated comprise a fraction of polymeric material and, even more in particular, in the event that this polymeric waste/scraps material is light and low-melting point material.

In fact, the treatment of polymeric materials in commonly known continuous heat treatment systems (e.g. in screw furnaces and rotary furnaces) is characterized by critical issues due, in particular, to the high viscosity of the polymeric material when it reaches the point (or range) of softening, just before melting (it is evident to one skilled in the art, how the melting and softening temperature varies according to the composition of the fraction of polymeric material of the material to be treated).

When the polymeric material reaches temperatures close to the softening ones, due to the high viscosity, it tends to adhere to the surfaces of the furnace (walls and screw), accumulating in the vicinity of the furnace/reactor area where it reaches the point/range of softening, up to causing clogging in said zone up to the blockage of the furnace/reactor itself.

Furthermore, the liquid that is formed following the melting of the polymeric material is collected at the bottom of the furnace/reactor and tends to exit due to the effect of gravity, with residence times at high temperatures reduced compared to those desired and, consequently, with a very low conversion yield of the starting polymeric material into the desired final products.

This liquid, which is made up of components with a high molecular weight (mainly waxes), also tends to solidify in the exit area of the furnace/reactor, clogging the outlet ducts of the solid residues.

To try to solve these problems typical of continuous processes and systems, technical solutions have been proposed which, for example, provide for operating continuously through a more accurate control of the temperature gradient, in order to try to avoid a rapid softening of the polymeric material inside the furnace/reactor (pyrolyzer).

This precaution, however, only allows to reduce the amount of material that solidifies on the walls of the furnace/reactor, thus avoiding the sudden blockage of the same, nonetheless, in the long run, stratifications of solidified material accumulate, progressively leading to a blockage of the furnace/reactor.

WO2002050484A1 describes a screw furnace in which in the feeding of the material to be treated, which consists mainly of electronic waste material and/or biomass, comprising polymeric materials, in which the addition of thermally conductive particles made of metal, ceramic or SiC is expected. These particles, in addition to improving the heat transfer inside the oven, also have the function of keeping the internal surface of the oven and the screw clean thanks to the mechanical action carried out by the particles themselves during their movement.

Laboratory tests conducted by mixing different types and mixture of material to be treated, which is generally made up of heterogeneous waste/scraps materials and comprising a fraction of reduced polymeric material in the form of particles, granules, chips, flakes or the like, with metal spheres, silicon carbide or even zeolites, as indicated in WO2002050484A1 or also in WO2012085880, have shown a separation of these spheres, which tend to stratify on the bottom of the furnace/reactor with respect to the fraction of plastic material of the material to be treated which on the other hand, it tends to float with respect to them during transport inside the furnace/reactor.

Such separation and such stratification do not allow to control the transport by dragging of the polymeric material which gradually softens until it melts with consequent problems of:
- clogging of the furnace/reactor section at which the polymeric material softens,
- uncontrolled exiting of the liquid material from the section of the furnace/reactor in correspondence with which the polymeric material is melted and, therefore,
- failure to control the residence times of the material to be treated in the heat treatment zone of the furnace/reactor with consequent poor conversion efficiency.

In light of the above, the need to have available methods and systems for the continuous heat treatment of waste materials comprising a fraction of polymeric material in valuable chemical products, for example olefins, capable of exceeding the technical problems described above.

### Summary of the invention

On the basis of the above, the Applicant has set itself the primary objective of providing a method for the continuous heat treatment of waste materials comprising a fraction of polymeric material which allows to avoid clogging of the pyrolyzer apparatus.

This and other purposes, which will be described below, have been achieved by means of a method for the continuous heat treatment of a stream of material to be treated comprising a fraction of polymeric material according to the invention, and described and claimed herein, which provides for the use of a particle-form solid inert material to be mixed with the material to be treated, also preferably reduced in the form of particles, granules, chips, flakes or the like.

According to a first aspect, the present invention relates to a method for the continuous heat treatment of a stream of material to be treated comprising a fraction of polymeric material wherein the use of a particle-form solid inert material is provided to improve the characteristics of fluidity of said material stream inside the reactor or heat treatment furnace (pyrolyzer) and to control the residence time of high molecular weight liquid products that derive from the melting and partial conversion of the fraction of polymeric material, in order to improve conversion yields, while avoiding clogging and blocking of process lines.

According to another aspect, the present invention relates to a plant comprising a pyrolyzer operating continuously, for the heat treatment of a stream of material to be treated comprising a fraction of polymeric material.

The present invention will now be described, for illustrative but not limitative purposes, according to its preferred embodiments, with particular reference to the attached figures, wherein:
Figure 1 shows a schematic block view of a plant for implementing the method according to the present invention;
Figure 2 shows a schematic view of a possible embodiment of a pyrolyzer forming part of the plant of Figure 1.

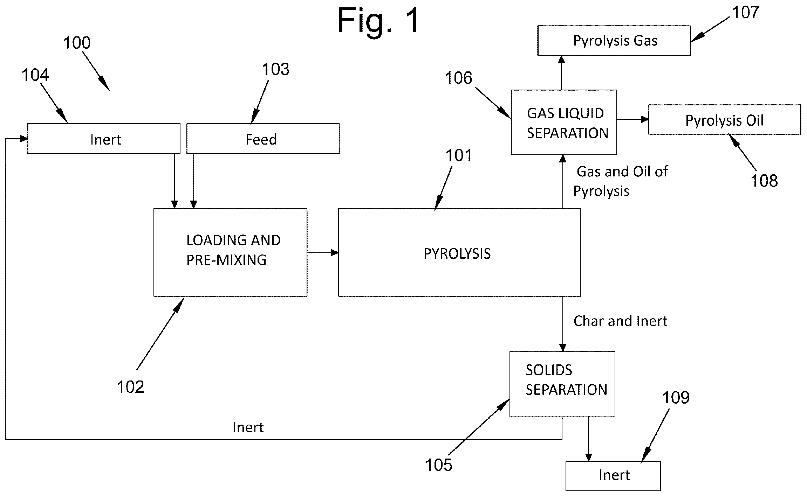

Figure 1 schematically shows in the form of a block diagram a plant, generically indicated with the numerical reference 100, for carrying out the method according to the invention.

It is to be understood that the plant 100 is illustrative only and that other types of plants could be used for carrying out the method according to the present invention, provided that they provide a system for mixing particle-form solid inert material SI with the material to be treated MT, as will be described in greater detail below and as defined in the claims.

It should be noted that in the following description the term "pyrolyzer" indicates a furnace, for example of the screw or rotary type, or a reactor within which the pyrolysis heat treatment is carried out.

The "stream of material to be treated" or the "material to be treated", indicated as MT, generally comprises mixtures of waste/scraps materials, including different and heterogeneous, post-consumer and/or post-industrial materials. This "stream of material to be treated" or "material to be treated" comprises at least a "fraction of polymeric material", preferably, but not exclusively, deriving from post-consumer and/or post-industrial waste/scraps materials.

This "fraction of polymeric material" can be made up of polymeric materials which may be diverse, heterogeneous and impure.

This "fraction of polymeric material" represents a substantial fraction of the stream of material to be treated, generally not less than 20% by weight and, advantageously, greater than 50% by weight.

The elements of the plant 100 common to plants already known in the art will not be described in detail, both in order not to improperly limit the scope of protection of the invention, and to avoid unduly burdening the description.

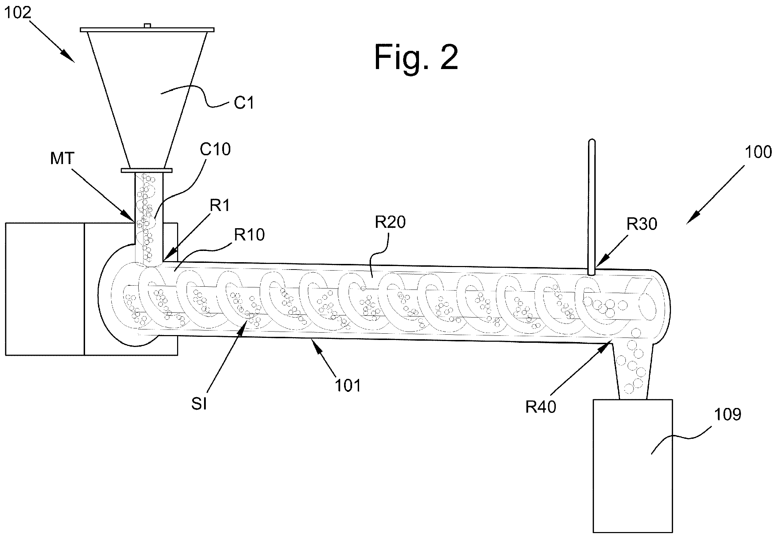

With reference to Figure 1 and Figure 2, a preferred embodiment of a plant 100 for carrying out the method according to the invention is illustrated, comprising:
- A pyrolyzer 101 (furnace or reactor) for example of the type of a reactor or furnace of the screw or rotary type, operating continuously and comprising in sequence an inlet zone and a heat treatment zone, within which the stream consisting of the mixture of the material to be treated is made to advance, comprising a fraction of polymeric material and particle-form solid inert material and along which there is a heat treatment zone along which this mixture is subjected to heating and thermal pyrolysis; the heat treatment zone in turn comprises a heating section R10 followed by a pyrolysis section R20 in correspondence with or downstream of which are provided: an outlet zone R30 for the gaseous products (gases and vapors) of pyrolysis and an outlet area R40 for the solid products (char) of pyrolysis together with the particle-form solid inert material SI.

The pyrolyzer 101 is then provided with at least one rotary means for advancing the stream of the mixture consisting of the material to be treated MT and the solid inert material SI from the inlet area R1, along the heat treatment zone until it reaches the outlet areas R30 and R40. Said rotary means can consist of the helicoid of a screw of a screw reactor and/or of the drum of a rotary reactor and/or of both.
In an advantageous embodiment, the heating section R10 and the pyrolysis section R20 each comprise their own rotary means for advancing the stream of material along the reactor and a drive motor for the respective rotary means, which can therefore be operated autonomously in concordant or opposite directions and/or at the same or different speeds.

Such an alternative embodiment allows a better control of the residence times of the material to be treated in the pyrolyzer 101 and in particular of the residence times of the material to be treated along the pyrolysis section R20, so as to allow the almost complete conversion of the fraction of polymeric material components having a high molecular weight (waxes).
- A loading and pre-mixing unit 102 consists of a loading hopper C1 and a screw conveyor C10a, the loading hopper C1 is fed at the inlet with a stream of material to be treated MT comprising a fraction of polymeric material and with a stream of particle-form solid inert material SI from the respective feed groups 103 and 104 (Figure 1).

The two streams, the one of material to be treated MT and the one of particle-form solid inert material SI, are mixed together inside the loading hopper C1 and/or along the screw conveyor C10 to form a mixture. The loading and pre-mixing unit 102 can be constituted by a separate group and arranged upstream of the pyrolyzer 101 or it can be integrated in the pyrolyzer 101 itself in correspondence with its section arranged upstream of the heat treatment zone;
- A group 105 for collecting the solid products leaving the pyrolyzer 101 (pyrolysis char and particle-form solid inert material). In a preferred embodiment, the solid products discharged at the outlet of the pyrolyzer 101 (pyrolysis char and particle-form solid inert material) are separated by methods and systems known to the skilled in the art and at least part of the particle-form solid inert material SI is recirculated at the inlet of the inert feed group 104. The solid pyrolysis product (char) separated from the solid inert material is instead collected in a collection group 109;
- A group for collecting and treating the pyrolysis gases/vapors 106 and which, in a known way, separates the condensable fraction (pyrolysis oil) which is collected in a tank 108 and the non-condensable fraction (pyrolysis gas) which is collection in a tank 107.

In a known way, an inert gas supply (nitrogen) is provided inside the pyrolyzer 101 in order to carry out the pyrolysis process in the absence of oxygen.

The pyrolyzer 101 (furnace or reactor) comprises at least one heating means arranged in correspondence with the heat treatment zone.

In a preferred embodiment, each of the heating section R10 and of the pyrolysis section R20 comprises its own independent heating means, which allows a greater control of the process temperatures.

The heating means is selected from an electric resistance, a heating jacket and/or a microwave generator, preferably a microwave generator.
In a possible preferred embodiment according to the invention, the heating section R10 and the pyrolysis section R20 each comprise at least one heating means. Generally, the heating means is of the electric resistance, burner or heating jacket type.

Referring now again to Figure 1 and Figure 2, the method according to the invention, which can be implemented with the illustrated plant 100, is described. It is to be understood that the plant 100 is provided for illustrative purposes only and must not be understood in any way as limiting the scope of protection of the object of the present invention, it being evident to those skilled in the art that the method can also be implemented with systems different from the one illustrated.

In particular, it is a method for the continuous heat treatment of a stream of material to be treated MT comprising a fraction of polymeric material, wherein this method comprises the steps of:
- forming a mixture of material to be treated and a particle-form solid inert material, wherein said material to be treated comprises a fraction of polymeric material, previously subjected to a densification/crushing step, said crushing step, reduces the material to be treat MT to the form of particles, granules, chips, flakes or the like.
The particle-form solid inert material SI is selected in such a way that its average dimensions and its apparent density have values close to those of the material to be treated MT (with the term "close value" meaning for example a ratio between the diameter of the plastic particles and of the inert material comprised in the interval between 0.1 and 2), also, as seen, fed in the form of particles, granules, chips, flakes or the like. This is in order to improve the stirring/mixing of the stream of material to be treated and of the solid inert material to form a single stream of mixture thereof, as well as the transport and dragging action of the material to be treated MT by the solid inert material SI, and, in particular, to those of the particles to which the fraction of polymeric material thereof has been reduced, wherein said at least one particle-form solid inert material SI is selected from inert materials stable at temperatures lower than or equal to 800°C and has at least one of the following characteristics:
- an apparent density (as defined by the UNI EN 1097-3 standard) between 700 kg/m³ and 1000 kg/m³, preferably between 800 kg/m³ and 900 kg/m³, and
- a porosity of between 25% and 85%, preferably between 45% and 75%.
The stream of material to be treated MT comprising a fraction of polymeric material and the stream of at least one particle-form solid inert material SI can be mixed before being fed into the inlet of the pyrolyzer 101, for example along the loading hopper C1 and the screw conveyor C10 connected to the inlet area R1, or can be fed separately directly into the pyrolyzer 101, being in any case closely mixed together to form a mixture upstream of the heat treatment zone thereof and, advantageously, upstream of the section of heating R10 of it.
The stream of material to be treated MT and the stream of solid inert material SI are mixed to form a single stream upstream of the inlet area R1 or upstream of the heat treatment zone of the pyrolyzer 101;
- advancing a stream of said mixture along the heat treatment zone of a pyrolyzer 101, that heat treatment zone comprises in sequence a heating section R10 and a pyrolysis section R20, along which said stream of said mixture is subjected to heating and pyrolyzing in the absence of oxygen at a temperature between 300°C and 900°C, obtaining condensable vapors and/or incondensable gases and solid carbon residues (char). The advancement of the stream consisting of the mixture of material to be treated MT and solid inert material SI mixed together is obtained by means of at least one rotary means which acts as a propeller and which, for example consists of the helicoid of an auger and/or the drum of the pyrolyzer 101.

Along the heating section R10, at a distance from the inlet area R1 which depends on the composition of the mixture forming the material to be treated MT, on the temperature and on the residence time inside this section (in turn a function of the rotation speed of at least one rotary means that acts as a propeller for the advancement of the stream of the mixture), the fed material to be treated MT is heated up until the polymeric fraction thereof reaches its point or rather range of softening, at which its state of aggregation from solid to fluid begins to be reformed and a high viscosity is assumed which favors its adhesion on the surface of the particles of said at least one solid inert material SI, on which a film is tended to be formed.

The particles of solid inert material SI with the mixture formed by the fraction of polymeric material adhered to their surface continue in their forward movement (generally helical) generated by said at least one rotary means, dragging and transporting the mixture of polymeric material along the heating section R10 and the pyrolysis section R20, so as to avoid the adhesion of the softened polymeric material on the internal surface of the pyrolyzer 101 and/or on said at least one rotary means and the subsequent growth phenomenon of the adhered layer which would cause the blockage of the apparatus.

At the beginning of the pyrolysis section R20, the complete melting of the polymeric material adhered to the surface of the particles of solid inert material SI takes place with the formation of a liquid which continues to adhere to the porous surface of the particles of said at least one solid inert material SI. This liquid gradually becomes less viscous as the pyrolysis temperature is reached, upon which the thermochemical degradation process of the polymers takes place and which involves the breaking of the polymer chains contained within the liquid polymer mixture adhered to the particles of solid material SI, with the production of a mixture of condensable vapors (pyrolysis oil) and incondensable gases (pyrolysis gas) and a solid residue consisting mainly of the solid inert material SI and the carbon residue of the pyrolysis reactions (char).

The adhesion of the film of liquid polymeric material on the particles of solid inert material SI ensures the advancement and dragging of the polymeric material (for example along a helical path) generated by said at least one rotary means and, therefore, a control of the residence times of the material to be treated and, in particular, of the fraction of polymeric material at high temperatures reached in the pyrolysis section R20, in such a way as to allow the almost complete conversion of the high molecular weight components (waxes) into oil and pyrolysis gas.
- exiting said condensable vapors and/or said incondensable gases obtained in the pyrolysis step through at least one gas outlet zone R30 of said pyrolyzer 101, in correspondence with the outlet zone R30 of the pyrolysis section R20, passing through a conduit equipped with a resistance and a thermocouple such as to avoid the formation of cold areas which could cause the higher boiling compounds to condense and deposit, creating obstructions to the duct of the gas outlet zone R30;
- exiting said solid carbon residues obtained in the pyrolysis step and said at least one solid inert material SI from at least one outlet area R40 of solid products of said pyrolyzer 101, through an opening located on the lower part thereof in correspondence with the outlet area R40 of solid products. The particles of solid inert material SI can therefore be separated, with technologies known to those skilled in the art and for this reason not described, and be recirculated in feed to the plant 100. The char or in any case the solid products of the pyrolysis separated from the solid inert material is collected in a collection group 109.

Advantageously, the particle-form solid inert material SI also has a variable surface roughness between 100 and 2000 microns, according to the UNI EN 15149 standard.

In a preferred embodiment, the particles of solid inert material SI have a spheroidal shape.

Furthermore, said at least one particle-form solid inert material SI can be characterized by:
- a crushing strength equal to or greater than 0.75 N/mm² , preferably equal to or greater than 1 N/mm² and/or
- an average size comprised between 0.5 mm and 40 mm, preferably between 3 mm and 20 mm
   (the measurement of the values being obtained by applying the UNI EN 15149 standards).

In a particularly preferred embodiment, the particle-form solid inert material SI consists of expanded clay.

In the case where the particle-form solid inert material SI consists of expanded clay.

Advantageously, said at least one particle-form solid inert material SI can be functionalized with catalytic doping.

Furthermore, as will become clearer in the following, in a possible embodiment of the method according to the present invention, said at least one particle-form solid inert material SI also has a dielectric constant greater than or equal to 10.

The particle-form solid inert material SI is then continuously fed into the plant, preferably in the form of spheroidal granules.

Furthermore, the particle-form solid inert material SI is preferably fed at the inlet to the loading and pre-mixing unit 102 and/or to the pyrolyzer 101 in a mass ratio between 0.5:1 and 1:1 with respect to the material to be treated MT.

It has already been said that the stream of material to be treated generally comprises a mixture of post-consumer and post-industrial waste/scraps materials, comprising heterogeneous ones, wherein at least a fraction of this mixture is made up of polymeric material. This fraction of polymeric material in turn can comprise polymeric materials which are also heterogeneous among themselves.

Advantageously, the fraction of polymeric material is a substantial fraction of the material to be treated, equal to at least 20% by weight, advantageously at least 50% by weight.

This method is applicable to any type of polymeric material that has a softening point or range. The polymeric material may be, for example, plastics, resins, rubbers, elastomers, tires, thermoplastics, thermosetting composites and mixtures thereof.

In the method according to the invention, the particle-form solid inert material SI can be recycled and then reused, by separating it from the solid carbon residues leaving the pyrolyzer 101 and recirculating it in the supply to the plant 100.

From tests carried out it has been found that the method according to the present invention allows to achieve the intended purposes.

Differently from what is known for example from WO20020050484A1 or WO2012085880, the method according to the present invention refers to the heat treatment of a material to be treated consisting of a mixture of waste/scraps materials comprising a substantial fraction of polymeric material through the use of particles of solid inert material having a lower density, a higher porosity and a higher roughness than the metallic, ceramic, silicon carbide or even zeolitic particles indicated in these prior documents:
- a lower density allows a homogeneous mixing of the particles of solid inert material with the material to be treated and in particular with its fraction of polymeric material in the solid state before the softening and melting phase of the latter, avoiding phenomena of separation and segregation;
- a higher roughness of the particles of solid inert material used in the method according to the present invention with respect to the metallic and/or ceramic particles used in WO 02/50484, provides a higher contact surface per unit of volume; upon reaching the softening temperature (i.e. glass transition temperature) of the polymeric material at which the transition between the glassy amorphous state and the rubbery amorphous state (the latter characterized by high viscosity) takes place, the highest contact surface per unit volume of the particles of solid inert material according to the present invention improves the adhesion of the softened polymeric material on their surface and the consequent dragging of the same along the heat treatment zone of the pyrolyzer, thus allowing an improved control of the residence times of the material to be treated and in particular of the fraction of polymeric material thereof inside the heating section, also avoiding its clogging;
- when the material to be treated advances along the pyrolysis section of the pyrolyzer, at which the fraction of polymeric material reaches the melting temperature, the higher porosity of the particles of solid inert material according to the present invention with respect to those used in the methods known (metal spheres, silicon carbide or zeolites) allows the transfer of the viscous liquid polymer phase on the surface and inside the pores of the particles of solid inert material with the formation of a liquid film, thus avoiding the rapid drainage of the melt towards the solid discharge and allowing a control of the residence times of the material inside the pyrolysis section with improved conversion efficiencies.

In an alternative embodiment of the present method, in addition to the aforementioned features (low density, high porosity and high roughness), the particles of solid inert material have a dielectric constant value such as to allow a very effective heating of the pyrolyzer and of the mass of inert material and plastic material through microwave heating system.

The features of the particles of solid inert material according to the method according to the present invention and as described above, guarantee a good mixing and a control of the transport of the material to be treated and, in particular, of the polymeric fraction thereof both at temperatures below the softening temperature (when the material is in the solid state) and upon reaching the temperature (or temperature range) at which the transition from the solid to the liquid phase takes place (when the material is in the viscous state), as well as when the melting temperature is reached (or range of temperatures at which the material passes to the liquid state) even in the absence of devices, such as for example plowshares, fins, spirals or the like that interact with the mixture consisting of the carbon matrix and the thermally conductive particles/spheres as described for example in WO2012085880.

In a possible advantageous alternative embodiment, the heating means consists of a microwave generator.

In this case, since the polymeric material is generally transparent to microwaves, said at least one particle-form solid inert material SI has a dielectric constant greater than or equal to 10, or in any case such as to effectively absorb microwaves and act as a thermal carrier.

In this configuration, the heating and subsequent softening of the material to be treated and in particular, its fraction consisting of polymeric material, which is transparent to microwaves, takes place by means of electromagnetic radiation of the particles of solid inert material SI which, being uniformly mixed with the material to be treated MT, allows a faster and more uniform heating than is possible with conduction heating systems.

In fact, if the heat flow is transferred through an exchange surface (for example the external wall of the reactor or the screw shaft), the material to be treated and therefore the polymeric material and the particles of solid inert material heat up by conduction only when they come into contact with these heat exchange surfaces. Since the contact surface between the heating element and the solid particles (polymeric material and inert particles) is reduced, the heat flow and, consequently, the heating rate are reduced compared to the case in which the particles of solid inert material are uniformly heated through electromagnetic radiation. The particles of solid inert material heated by electromagnetic radiation offer, in fact, a much greater contact surface and therefore of heat exchange compared to the surfaces of the furnace/reactor and/or of the screw.

The present invention has been described for illustrative, but not limitative purposes, with reference to its preferred embodiments, but it is understood that variations and/or modifications can be made by a person skilled in the art, without thereby departing from the relative scope of protection as defined in the claims.

## Claims

1. Method for the continuous heat treatment of a feed material stream (MT) comprising at least a fraction of polymeric material, comprising the steps of:
- forming a mixture of a material to be treated (MT) and of at least one particle-form solid inert material (SI), wherein said material to be treated comprises a fraction of polymeric material;
- advancing a stream of said mixture along the heat treatment zone of a pyrolyzer (101), that heat treatment zone comprises in sequence a heating section (R10) and a pyrolysis section (R20), along which said stream of said mixture is subjected to heating and pyrolyzing in the absence of oxygen at a temperature between 300°C and 900°C, obtaining condensable vapors and/or incondensable gases and solid carbon residues;
- exiting said condensable vapors and/or said incondensable gases obtained in the pyrolysis step through at least one gas outlet zone (R30) of said pyrolyzer (101);
- exiting said solid carbon residues obtained in the pyrolysis step and said at least one particle-form solid inert material (SI) through at least one outlet area (R40) of solid products of said pyrolyzer (101), wherein said at least one particle-form solid inert material (SI) is stable at temperatures lower than or equal to 800°C and has at least one of the following characteristics:
- a density (as defined by the UNI EN 1097-3 standard) between 700 kg/m³ and 1000 kg/m³, preferably between 800 kg/m³ and 900 kg/m³, and/or
- a porosity of between 25% and 85%, preferably between 45% and 75%.

2. Method according to claim 1, wherein said at least one particle-form solid inert material (SI) has a variable between 100 and 2000 microns, according to the UNI EN 15149 standard.

3. Method according to any one of the preceding claims, wherein said at least one particle-form solid inert material (SI) is in the form of substantially spheroidal particles.

4. Method according to any one of the preceding claims, wherein said at least one particle-form solid inert material (SI) further has:
- a crushing strength equal to or greater than 0.75 N/mm², preferably equal to or greater than 1 N/mm² and/or
- an average size comprised between 0.5 mm and 40 mm, preferably between 3 mm and 20 mm.

5. Method according to one or more of the preceding claims, wherein said at least one particle-form solid inert material (SI) is **characterized by** a dielectric constant greater than or equal to 10.

6. Method according to one or more of the preceding claims, wherein said at least one particle-form solid inert material (SI) consists of expanded clay.

7. Method according to one or more of the preceding claims, wherein said material to be treated (MT) comprising a fraction of polymeric material is supplied in the solid state in the form of particles, granules, chips, flakes or the like.

8. Method according to one or more of the preceding claims, wherein said material to be treated (MT) comprising a fraction of polymeric material comprises post-consumer and/or post-industrial waste and/or scraps containing polymeric material.

9. Method according to one or more of the preceding claims, wherein said fraction of polymeric material of material to be treated (MT) is equal to at least 20% by weight, preferably greater than 50% by weight.

10. Method according to one or more of the preceding claims, wherein said polymeric material forming said fraction comprises one or more polymers, at least some of which, before reaching the melting temperature, have a softening point or range.

11. Method according to any one of the preceding claims, wherein the mass ratio between said at least one particle-form solid inert material (SI) and said material to be treated (MT) comprising a fraction of polymeric material varies between 0.5:1 and 1:1.

12. Method according to any one of the preceding claims, wherein said heating section (R10) and said pyrolysis section (R20) comprise at least one heating means selected from an electrical resistance, a heating jacket and/or a microwave generator.

13. Method according to any one of the preceding claims, wherein said heating section (R10) and said pyrolysis section (R20) comprise at least one heating medium consisting of a microwave generator, said particle-form solid inert material (SI) having a dielectric constant greater than or equal to 10.

14. Plant (100) for carrying out a method according to any one of the preceding claims, comprising a pyrolyzer (101) operating continuously and comprising in sequence an inlet zone (R1) and a heat treatment zone along which a heating section (R10) is followed by a pyrolysis section (R2), wherein a continuous stream of a mixture of a material to be treated (MT) comprising a fraction of polymeric material and at least one particle-form solid inert material (SI) is made to advance along said heat treatment zone.

15. Plant according to claim 14, comprising upstream of said pyrolyzer (101) a loading and pre-mixing unit (102) which is fed at the inlet with a stream of said material to be treated (MT) comprising a fraction of polymeric material and a stream of said at least one particle-form solid inert material (SI), wherein said material to be treated (MT) comprising a fraction of polymeric material and said at least one particle-form solid inert material (SI) are mutually mixed by said loading and pre-mixing unit (102) to form a single stream which is fed at the inlet to said inlet area (R1).

16. Plant (100) according to claim 14 or 15, wherein said heat treatment zone comprises at least a heating means selected from an electric resistance, a heating jacket and/or a microwave generator, preferably a microwave generator.

17. Plant (100) according to claim 16, wherein each of said heating section (R10) and of said pyrolysis section (R20) comprises its own respective said heating means.

18. Plant (100) according to any one of claims 14 to 17, wherein said heating section (R10) and said pyrolysis section (R20) comprise at least one rotary means for advancing the stream of said mixture along said pyrolyzer (101) and at least one motor for driving said rotary means.

19. Plant (100) according to claim 18, wherein said heating section (R10) and said pyrolysis section (R20) each comprise a respective said rotary means for advancing the stream of said mixture and a respective drive motor of said rotary means, said rotary means being operable independently from each other.
